# EUROPÄISCHE PATENTANMELDUNG

(11) **EP 4 212 271 A1**
(43) Veröffentlichungstag der Anmeldung: **19.07.2023**
(21) Anmeldenummer: 23150292.3
(22) Anmeldetag: 04.01.2023
(51) Int. Cl.: B23B 31/30, B23Q 3/08, B25B 5/06, F15B 15/26, F16B 2/04, F16B 1/00, B23B 31/117

(54) **SELBSTSICHERNDE, FLUIDISCHE KLEMMVORRICHTUNG**

(30) Priorität: 13.01.2022 DE 102022100748
(71) Anmelder: Vrhovec, Miha, 1354 Horjul (SI)
(72) Erfinder: Vrhovec, Miha, 1354 Horjul (SI)
(74) Vertreter: Grünecker Patent- und Rechtsanwälte PartG mbB

(57) **Zusammenfassung**

Die vorliegende Erfindung stellt eine fluidische Klemmvorrichtung (100) mit einer Hülse (110) zum Klemmen und Halten eines bewegbaren Teils (200) zur Verfügung. Die Hülse (110) umfasst ein zentrales Element (111) mit einem Querschnitt in einer Längsrichtung des zentralen Elements (111), der einen Hohlraum umfasst, der konfiguriert ist, den bewegbaren Teil (200) aufzunehmen. Die fluidische Klemmvorrichtung (100) ist dadurch gekennzeichnet, dass die Hülse (110) des Weiteren mindestens eine Kammer (112) umfasst, die an einem äußeren Umfang des zentralen Elements (111) angeordnet ist und sich entlang der Längsrichtung des zentralen Elements (111) erstreckt, wobei die mindestens eine Kammer (112) konfiguriert ist, ein Fluid aufzunehmen, wobei die fluidische Klemmvorrichtung (100) konfiguriert ist, einen Innenraum der mindestens einen Kammer (112) mit einem ersten oder zweiten vorbestimmten, fluidischen Druck zu beaufschlagen, wobei der erste vorbestimmte, fluidische Druck niedriger als der zweite vorbestimmte, fluidische Druck ist, und wobei das zentrale Element (111) konfiguriert ist, in einem ersten Zustand, in dem der Innenraum der mindestens einen Kammer (112) mit dem ersten fluidischen Druck beaufschlagt ist, mit dem bewegbaren Teil (200) an wenigstens einem Bereich eines inneren Umfangs des zentralen Elements (111) in kraftschlüssigem Kontakt zu sein und den bewegbaren Teil (200) zu klemmen und zu halten, und wobei das zentrale Element (111) konfiguriert ist, in einem zweiten Zustand, in dem der Innenraum der mindestens einen Kammer (112) mit dem zweiten fluidischen Druck beaufschlagt ist, mit dem bewegbaren Teil (200) an keinem Bereich des inneren Umfangs des zentralen Elements (111) in kraftschlüssigem Kontakt zu sein.

## Beschreibung

### Gebiet der Erfindung

Die vorliegende Erfindung betrifft eine Vorrichtung zum statischen Klemmen und Halten von zylindrischen, prismatischen oder quaderförmigen Teilen beispielsweise von Rotations- oder Linearachsen in Automationseinrichtungen, Maschinenwerkzeugen, Robotertechnik und anderen Anwendungen, in der Präzisions-Hydraulik oder Präzisions-Pneumatik.

### Stand der Technik

Aus dem Stand der Technik sind in der Präzisions-Hydraulik verschiedene Klemm- und Haltevorrichtungen bekannt, die zum statischen Sichern und Klemmen von bewegbaren Teilen verwendet werden. Beispielsweise gibt es einen Ansatz in der Sicherheitstechnik, der auf konischen oder keilförmigen Elementen basiert. Bei einem Versagen einer Betriebsbremse oder eines Antriebs wie beispielsweise einer Hydraulik in einer Maschine können Klemm- und Haltevorrichtungen mit den genannten konischen oder keilförmigen Elementen verwendet werden. Die konischen oder keilförmigen Elemente können beispielsweise beim Versagen eines Antriebs verhindern, dass eine sich bewegende, schwere Last auf Personen herabstürzt. Die Vorteile der konischen oder keilförmigen Elemente liegen in einer starken Haltekraft und in einer sich selbstsichernden Klemmung. Nachteilig ist, dass das Klemmen bzw. Lösen der Klemmung durch das konische oder keilförmige Element die Last verschiebt. Daraus resultiert eine niedrige Klemmpräzision. Des Weiteren kann das konische oder keilförmige Element nicht ohne weitere Komponenten eingesetzt werden. Die Komponenten sind beweglich und deshalb Gegenstand von Abrieb und Verschleiß und bedingen einen hohen Wartungsaufwand. Nachteilig kommt weiterhin dazu, dass die Komponenten, die das konische oder keilförmige Element umfassen, im Vergleich zum Durchmesser der bewegbaren Last ein schweres Gewicht und einen großen Umfang aufweisen und deshalb für platzbeschränkte Anwendungen nicht geeignet sind. In einem anderen Ansatz werden Klemmhülsen verwendet. Die Haltekraft dieser Klemmhülsen wird erreicht, indem der Hülsenmantel von außen mit hydraulischem Druck beaufschlagt wird. So kann ohne die Verwendung von zusätzlichen, beweglichen Teilen eine hohe Klemmpräzision erreicht werden. Des Weiteren weist eine solche Klemmhülse einen kompakten Umfang und ein niedriges Gewicht auf. Der Nachteil dieser Klemmhülsen besteht jedoch darin, dass der hydraulische Druck während des gesamten Klemmvorgangs aufrechterhalten werden muss. Wenn eine solche Klemmhülse in Verbindung mit schweren Lasten verwendet wird, wird eine zusätzliche Absicherung notwendig, die bei einem Versagen der Hydraulik verhindert, dass die schwere Last ungehalten Schaden verursacht. Deshalb werden die Komplexität und der Preis eines hydraulischen Systems, das solche Klemmhülsen anwendet, übermäßig erhöht. Für statisches Klemmen von Maschinenwerkzeugen wie beispielsweise Schneideeinrichtungen, werden polygonal geformte Halterungen verwendet. Die Halterungen sind jedoch passiv und erfordern eine spezielle Vorrichtung zum Spannen und Lösen eines Werkzeugs.

Es liegt somit der vorliegenden Erfindung die Aufgabe zugrunde, eine selbstsichernde, fluidische Klemmvorrichtung bereitzustellen, die sowohl hochpräzises Klemmen erlaubt als auch einen kompakten Umfang und ein geringes Gewicht aufweist. Darüber hinaus liegt der vorliegenden Erfindung die Aufgabe zugrunde, eine selbstsichernde, fluidische Klemmvorrichtung bereitzustellen, die aufgrund der selbstsichernden Eigenschaft in der Lage ist, schwere Lasten sicher zu halten, ohne dass fluidischer Druck während des Betriebs konstant aufrechterhalten werden muss.

### Beschreibung der Erfindung

Die oben genannte Aufgabe wird gelöst durch eine fluidische Klemmvorrichtung mit einer Hülse zum Klemmen und Halten eines bewegbaren Teils, wobei die Hülse umfasst: ein zentrales Element mit einem Querschnitt in einer Längsrichtung des zentralen Elements, der einen Hohlraum umfasst, der konfiguriert ist, den bewegbaren Teil aufzunehmen. Die fluidische Klemmvorrichtung ist dadurch gekennzeichnet, dass die Hülse weiterhin umfasst: mindestens eine Kammer, die an einem äußeren Umfang des zentralen Elements angeordnet ist und sich entlang der Längsrichtung des zentralen Elements erstreckt, wobei die mindestens eine Kammer konfiguriert ist, ein Fluid aufzunehmen, wobei die fluidische Klemmvorrichtung konfiguriert ist, einen Innenraum der mindestens einen Kammer mit einem ersten oder zweiten vorbestimmten, fluidischen Druck zu beaufschlagen, wobei der erste vorbestimmte, fluidische Druck niedriger als der zweite vorbestimmte, fluidische Druck ist; und wobei das zentrale Element konfiguriert ist, in einem ersten Zustand, in dem der Innenraum der mindestens einen Kammer mit dem ersten fluidischen Druck beaufschlagt ist, mit dem bewegbaren Teil an wenigstens einem Bereich eines inneren Umfangs des zentralen Elements in kraftschlüssigem Kontakt zu sein und den bewegbaren Teil zu klemmen und zu halten; und wobei das zentrale Element konfiguriert ist, in einem zweiten Zustand, in dem der Innenraum der mindestens einen Kammer mit dem zweiten fluidischen Druck beaufschlagt ist, mit dem bewegbaren Teil an keinem Bereich des inneren Umfangs des zentralen Elements in kraftschlüssigem Kontakt zu sein.

Die fluidische Klemmvorrichtung kann beispielsweise eine hydraulisch oder pneumatisch betriebene Klemmvorrichtung sein. Erfindungsgemäß umfasst die Hülse ein zentrales Element. Das zentrale Element kann ein röhrenförmiger Körper sein, der einen Gegenstand aufnehmen kann. Das zentrale Element erstreckt sich in Längsrichtung entlang einer Längsachse der Hülse und in radialer Richtung senkrecht zur Längsachse.

Erfindungsgemäß weist das zentrale Element der Hülse einen Querschnitt in der Längsrichtung auf. Der Querschnitt kann konstant sein, wobei der Begriff "konstant" meint, dass der Umriss und die Form des Querschnitts entlang der Längsrichtung des zentralen Elements konstant bleiben. Wenn der Querschnitt in der Längsrichtung konstant ist, ändern sich der äußere und innere Umfang des zentralen Elements entlang der Längsrichtung nicht. Des Weiteren können die Abmessungen des zentralen Elements im Querschnitt entlang der Längsrichtung gleichbleiben. Die Hülse einschließlich der mindestens einen Kammer kann ebenfalls einen konstanten Querschnitt in Längsrichtung aufweisen. Der Querschnitt kann in der Längsrichtung variieren, so dass der innere Umfang des zentralen Elements konstant sein kann, während der äußere Umfang des zentralen Elements leicht variieren kann. Die Hülse einschließlich der mindestens einen Kammer kann einen Querschnitt aufweisen, der entlang der Längsrichtung variiert.

Erfindungsgemäß ist die mindestens eine Kammer an dem äußeren Umfang des zentralen Elements der Hülse angeordnet und erstreckt sich entlang der Längsrichtung des zentralen Elements. Das zentrale Element kann von mehreren Kammern umgeben sein. Die mindestens eine Kammer kann eine Umwandung aufweisen. Die Umwandung der mindestens einen Kammer kann einen Abschnitt aufweisen, der zum äußeren Umfang des zentralen Elements hin gelegen ist, und einen Abschnitt, der von dem äußeren Umfang des zentralen Elements entfernt positioniert ist, wobei die beiden Abschnitte der Umwandung in Bezug auf den Innenraum der mindestens einen Kammer einander gegenüberliegen. Mit anderen Worten liegt der Innenraum der mindestens einen Kammer zwischen den beiden Abschnitten. Die mindestens eine Kammer kann im Querschnitt so geformt sein, dass eine Länge des Abschnitts der Umwandung der mindestens einen Kammer, der zum äußeren Umfang des zentralen Elements hin gelegen ist, kürzer ist als eine Länge des Abschnitts, der Umwandung, der von dem äußeren Umfang des zentralen Elements entfernt positioniert ist. Die mindestens eine Kammer kann an dem äußeren Umfang des zentralen Elements so angeordnet sein, dass ein Abschnitt des äußeren Umfangs des zentralen Elements den Abschnitt der Umwandung der mindestens einen Kammer bildet, der zum äußeren Umfang des zentralen Elements hin gelegen ist. Alternativ kann der Abschnitt des äußeren Umfangs des zentralen Elements mit dem Abschnitt der Umwandung der mindestens einen Kammer, der zum äußeren Umfang des zentralen Elements hin gelegen ist, dauerhaft verbunden sein. Die mindestens eine Kammer kann so geformt sein, dass eine Dicke des Abschnitts der Umwandung, der von dem äußeren Umfang des zentralen Elements entfernt positioniert ist, kleiner als eine Dicke der übrigen Umwandung ist. Die mindestens eine Kammer kann so geformt sein, dass eine Dicke des Abschnitts der Umwandung, der zum äußeren Umfang des zentralen Elements hin gelegen ist, größer als eine Dicke der übrigen Umwandung ausgebildet ist.

Erfindungsgemäß ist der erste vorbestimmte, fluidische Druck niedriger als der zweite vorbestimmte, fluidische Druck. Der erste vorbestimmte, fluidische Druck kann Null sein oder einem Umgebungsdruck, beispielsweise einem Umgebungsluftdruck, entsprechen. Derfluidische Druck kann hydraulischen Druck oder pneumatischen Druck umfassen. Die Anwendung der fluidischen Klemmvorrichtung ist auf kein spezielles Fluid eingeschränkt. Für die Ausübung des fluidischen Drucks kann jedes Fluid verwendet werden. Das Fluid kann beispielsweise Hydrauliköl, Wasser oder Luft umfassen.

Erfindungsgemäß weist das zentrale Element in einem ersten Zustand, in dem der Innenraum der mindestens einen Kammer mit dem ersten fluidischen Druck beaufschlagt ist, wenigstens einen Bereich an einem inneren Umfang des zentralen Elements auf, der mit dem bewegbaren Teil in kraftschlüssigem Kontakt ist, wenn der bewegbare Teil in die Hülse eingeführt ist. In dem ersten Zustand können die mindestens eine Kammer und das zentrale Element der Hülse eine Ausgangsform aufweisen. Wenn der bewegbare Teil nicht in die Hülse eingeführt ist, kann der wenigstens eine Bereich am inneren Umfang des zentralen Elements im Querschnitt in dem ersten Zustand in den Hohlraum hineinragen.

Der bewegbare Teil kann beispielsweise ein zylindrisch geformter Teil sein, der rotiert oder translatorisch bewegt wird. Der bewegbare Teil kann beispielsweise ein polygonal geformter Teil sein, der translatorisch bewegt wird.

Die erfindungsgemäße, fluidische Klemmvorrichtung kann ohne Zuführung von Energie in Form von fluidischem Druck in einem Klemm- und Haltezustand betrieben werden. Die Zuführung von Energie in Form von fluidischem Druck ist nur dann nötig, wenn der Klemm- und Haltezustand beendet wird. Während des Einsetzens des Klemm- und Haltezustands und während des Beendens des Klemm- und Haltezustands wird kein Bewegen oder Verschieben durch die erfindungsgemäße, fluidische Klemmvorrichtung auf den bewegbaren Teil ausgeübt. Des Weiteren gewährt die erfindungsgemäße, fluidische Klemmvorrichtung eine erhöhte Sicherheit, da der Klemm- und Haltezustand ohne Energie in Form von fluidischem Druck stattfinden kann und dieser Zustand auch bei einem möglichen Betriebsausfall der Energiezufuhr aufrecht erhalten bleibt. Somit stellt die Erfindung eine selbstsichernde, fluidische Klemmvorrichtung mit den oben beschriebenen Vorteilen bereit.

Gemäß einer Weiterbildung ist die mindestens eine Kammer konfiguriert, sich bei Beaufschlagung des Innenraums der mindestens einen Kammer mit dem zweiten fluidischen Druck aus einer Ausgangsform elastisch zu verformen und bei Beaufschlagung des Innenraums der mindestens einen Kammer mit dem ersten fluidischen Druck in ihre Ausgangsform zurückzukehren. Ein genauer Umriss der mindestens einen Kammer kann im Querschnitt so angepasst sein, dass eine Form erreicht wird, in der die erhaltene Verformung in dem Bereich des inneren Umfangs des zentralen Elements, an dem das zentrale Element und der bewegbare Teil in kraftschlüssigem Kontakt sind, für einen gegebenen, fluidischen Druck maximiert wird. Dadurch kann ein Freiraum oder Spiel zwischen dem inneren Umfang des zentralen Elements und dem bewegbaren Teil erzielt werden. Die Größe, die Umwandungsdicke, der Winkel, in dem die mindestens eine Kammer an das zentrale Element angebracht wird, Übergangsradien und andere geometrische Eigenschaften des Umrisses der mindestens einen Kammer können entsprechend angepasst werden. Gleichzeitig kann das zentrale Element im Querschnitt so angepasst werden, dass lokale Materialspannungen in der Hülse reduziert werden, wenn die mindestens eine Kammer mit Druck beaufschlagt wird, um einen Betrieb im elastischen Bereich der Spannungs-Verformungs-Kurve des für die Hülse gewählten Materials zu gewährleisten. Das kann Materialermüdung während eines wiederholten Betriebs reduzieren und die Lebenszeit der Hülse erhöhen.

Gemäß einer weiteren Weiterbildung ist der Querschnitt des zentralen Elements in einem zweiten Zustand, in dem die mindestens eine Kammer mit dem zweiten fluidischen Druck beaufschlagt ist, kreisförmig oder weist eine polygonale Form auf. Beispielsweise kann der Querschnitt im Falle eines rotierenden, zylindrischen, bewegbaren Teils kreisförmig sein. Im Falle eines translatorisch bewegbaren Teils kann der Querschnitt jede polygonale Form aufweisen, die der Form des bewegbaren Teils entspricht. Der Querschnitt des zentralen Elements kann in einem ersten Zustand, in dem die mindestens eine Kammer mit dem ersten fluidischen Druck beaufschlagt ist, nicht kreisförmig sein.

Gemäß einer weiteren Weiterbildung ist der Querschnitt des zentralen Elements mit Verformen der mindestens einen Kammer bei Beaufschlagung des Innenraums der mindestens einen Kammer mit dem zweiten fluidischen Druck von einer Längsachse radial elastisch verformbar und/oder die mindestens eine Kammer ist weiterhin konfiguriert, sich bei Beaufschlagung des Innenraums der mindestens einen Kammer mit dem zweiten fluidischen Druck in einer Querrichtung, die senkrecht zur Längsrichtung ist, weg von dem zentralen Element elastisch zu verformen. Bei Beaufschlagung des Innenraums der mindestens einen Kammer mit dem zweiten fluidischen Druck können im Innenraum der mindestens einen Kammer Kräfte erzeugt werden, die vom Inneren der mindestens einen Kammer nach Außen drücken. Der von dem zentralen Element entfernte Abschnitt der Umwandung der mindestens einen Kammer kann im Querschnitt so geformt sein, dass er bogenförmig vom Inneren der mindestens einen Kammer nach außen (konkav) gekrümmt ist. Alternativ kann der von dem zentralen Element entfernt positionierte Abschnitt der Umwandung der mindestens einen Kammer im Querschnitt so geformt sein, dass er gerade ist. Der von dem äußeren Umfang des zentralen Elements entfernt positionierte Abschnitt der Umwandung der mindestens einen Kammer kann den im Inneren der mindestens einen Kammer entstandenen Kräften einen geringeren Widerstand entgegen setzen als der ihm in Bezug auf den Innenraum der mindestens einen Kammer gegenüberliegende Abschnitt der Umwandung, der zum äußeren Umfang des zentralen Elements hin gelegen ist. In der Folge kann der von dem äußeren Umfang des zentralen Elements entfernt positionierte Abschnitt der Umwandung durch die entstandenen Kräfte elastisch verformt und die mindestens eine Kammer aus ihrer Ausgangsform in eine vom Hohlraum weg gespannte Form gedrückt werden.

Die mindestens eine Kammer und das zentrale Element der Hülse können in einem Querschnitt so ausgebildet sein, dass sie entlang der Längsrichtung der Hülse relativ unflexibel und starr sind. Die mindestens eine Kammer und das zentrale Element der Hülse können so ausgebildet sein, dass sie in dem Querschnitt drehsteif um die Achse der Längsrichtung sind. Die mindestens eine Kammer und das zentrale Element der Hülse können dagegen relativ flexibel gegenüber den radialen Kräften in der Ebene desselben Querschnitts sein.

Die mindestens eine Kammer kann mit einem Fluid, beispielsweise einer hydraulischen Flüssigkeit, Luft oder einem Gas, gefüllt sein. Die fluidische Klemmvorrichtung kann betätigt werden, indem die mindestens eine Kammer mit hydraulischem oder pneumatischem Druck beaufschlagt oder entlastet wird, wobei der Querschnitt der Hülse elastisch verformt werden kann.

Gemäß einer weiteren Weiterbildung ist durch Verformen der mindestens einen Kammer das Verformen des zentralen Elements bewirkbar. Durch die Verbindung der mindestens einen Kammer mit dem zentralen Element entstehen bei Beaufschlagung des Innenraums der mindestens einen Kammer mit dem zweiten fluidischen Druck Zugkräfte, die auf das zentrale Element einwirken. In der Folge wird der wenigstens eine Bereich des inneren Umfangs des zentralen Elements, der in den Hohlraum hineinragt, aus dem Hohlraum gezogen, so dass bei Vorhandensein des bewegbaren Teils kein Bereich des inneren Umfangs des zentralen Elements mit dem bewegbaren Teil in kraftschlüssigem Kontakt ist. Das zentrale Element kann im Querschnitt ein Spiel oder Freiraum zwischen dem inneren Umfang des zentralen Elements und dem bewegbaren Teil aufweisen. Das Spiel oder der Freiraum erlaubt, dass das zentrale Element und der bewegbare Teil gegeneinander verschoben werden können.

Die Umrisse des zentralen Elements können so gebildet werden, dass eine gewünschte Spielpassung und Gleitpassung gegenüber dem bewegbaren Teil bei dem zweiten, fluidischen Druck exakt erhalten werden können. Zum Beispiel kann eine Spielpassung von H7/g6 nach der DIN-Norm DIN 7157 ausgebildet werden. Weitere Normen sind beispielsweise DIN 7154 und DIN 7155. Die DIN-Norm DIN 7157 definiert Passungsauswahlen in den Passungssystemen "Einheitsbohrung" und "Einheitswelle". Bei der Kombination im System "Einheitsbohrung mit Spiel" (Spielpassungen) bezeichnet der Buchstabe "H" die Ausführung für die Bohrung und der Buchstabe "g" die Ausführung für die Welle. Der bewegbare Teil kann durch die Hülse aufgrund eines definierten Spiels exakt geführt werden, wenn die Hülse in dem zweiten Zustand ist, in dem der Innenraum der mindestens einen Kammer mit dem zweiten, fluidischen Druck beaufschlagt ist.

Gemäß einer weiteren Weiterbildung umfasst die fluidische Klemmvorrichtung weiterhin: eine obere Kappe, die an einem oberen Ende der mindestens einen Kammer angeordnet ist; eine untere Kappe mit mindestens einer Öffnung, wobei die untere Kappe an einem unteren Ende der mindestens einen Kammer angeordnet ist; und einen Anschlussflansch mit einem Kanal und wenigstens einer Kanaleingangsöffnung, wobei der Kanal in Fluidverbindung mit der mindestens einen Öffnung der unteren Kappe ist. Die obere Kappe kann ringförmig oder in Entsprechung zum zentralen Element polygonal ausgebildet sein. Ein innerer Umfang der oberen Kappe kann im Querschnitt eine andere Form aufweisen als ein äußerer Umfang der oberen Kappe. Die obere Kappe kann einen oberen Abschluss der erfindungsgemäßen, fluidischen Klemmvorrichtung bilden. Die obere Kappe kann so geformt sein, dass der bewegbare Teil durch die obere Kappe hindurchgeführt werden kann. Die obere Kappe kann die mindestens eine Kammer verschließen. Die untere Kappe kann ringförmig oder in Entsprechung zum zentralen Element polygonal ausgebildet sein. Ein innerer Umfang der unteren Kappe kann im Querschnitt eine andere Form aufweisen als ein äußerer Umfang der unteren Kappe. Die untere Kappe kann einen unteren Abschluss der erfindungsgemäßen, fluidischen Klemmvorrichtung bilden. Die untere Kappe kann so geformt sein, dass der bewegbare Teil durch die untere Kappe hindurchgeführt werden kann. In einem Herstellungsprozess der fluidischen Klemmvorrichtung können die obere Kappe, die Hülse, die untere Kappe und der Anschlussflansch miteinander verbunden werden, so dass ein einziges, monolithisches Element gebildet wird. Das hat den Vorteil, dass durch die resultierende, monolithische Struktur keine beweglichen Teile vorhanden sind. Somit ist keine Wartung von beweglichen Teilen notwendig, die einem Verschleiß und Abrieb unterworfen wären.

Gemäß einer weiteren Weiterbildung entspricht eine Anzahl der mindestens einen Öffnung der unteren Kappe einer Anzahl der mindestens einen Kammer. Jede der mindestens einen Öffnung der unteren Kappe kann mit jeder der mindestens einen Kammer in Fluidverbindung sein.

Gemäß einer weiteren Weiterbildung ist der Anschlussflansch weiterhin konfiguriert, das Fluid von der wenigstens einen Kanaleingangsöffnung durch den Kanal und die mindestens eine Öffnung der unteren Kappe in die mindestens eine Kammer zu verteilen.

Gemäß einer weiteren Weiterbildung sind das zentrale Element und die mindestens eine Kammer einstückig ausgebildet.

Gemäß einer weiteren Weiterbildung sind die obere Kappe, die untere Kappe und der Anschlussflansch unelastisch ausgebildet und bleiben in dem ersten Zustand oder dem zweiten Zustand starr. Die obere Kappe, die untere Kappe und der Anschlussflansch verformen sich bei Beaufschlagung des Innenraums der mindestens einen Kammer mit dem zweiten fluidischen Druck nicht. Die obere Kappe, die untere Kappe und der Anschlussflansch behalten während des Betriebs und außerhalb des Betriebs der fluidischen Klemmvorrichtung stets ihre ursprüngliche Form bei, d.h. sie biegen sich nicht und verformen sich nicht.

Gemäß einer weiteren Weiterbildung umfassen die Hülse, die obere Kappe, die untere Kappe und der Anschlussflansch gleiches Material. Das Material kann geeignete, mechanische Eigenschaften für die gewünschte Anwendung und Klemmkraft besitzen. Das Material kann ein entsprechender Verbund von Metallen, Polymeren und anderen Materialien sein. Für eine Anwendung, bei der eine hohe Klemmkraft erzielt werden soll, kann das Material ein hochfester Stahl oder Federstahl, beispielsweise ein DIN/EN 51CrV4-Stahl oder ein ähnliches Material, sein. Das Material kann geeigneter Weise wärmebehandelt, gehärtet oder temperiert sein, um die optimalen, mechanischen Eigenschaften für eine gewünschte Betriebsleistung und Lebenszeit zu erhalten. Insbesondere können eine ausreichende Formänderungsfestigkeit und Ermüdungsfestigkeit für einen bestimmten fluidischen Druck in der Hülse während des wiederholten Klemmen-Lösen-Betriebs erreicht werden. Bevorzugter Weise werden die Hülse, die obere Kappe, die untere Kappe und der Anschlussflansch aus dem gleichen Material hergestellt und so miteinander verbunden, dass die Klemmvorrichtung einen einzigen Teil bildet. Wenn die Hülse, die obere Kappe, die untere Kappe und der Anschlussflansch aus Stahl oder einem anderen, metallischen Material hergestellt werden, können die Hülse, die obere Kappe, die untere Kappe und der Anschlussflansch mit Hilfe von Löten oder Hartlöten zusammengefügt werden. Das gewährleistet eine angemessene Verbindung zwischen allen Teilen in Form von mechanischer Intaktheit und Abdichtung der mindestens einen Kammer und erreicht ein einziges, monolithisches Element als fluidische Klemmvorrichtung. Das Lötfüllmaterial kann geeignete, mechanische Eigenschaften aufweisen, um die bauliche Beanspruchung, die durch den fluidischen Druck verursacht wird, auszuhalten. Das Lötfüllmaterial kann des Weiteren einen angemessenen Schmelzpunkt haben, der mit der erforderlichen Wärmebehandlung des Materials für die Hülse, die obere Kappe, die untere Kappe und den Anschlussflansch kompatibel ist. Wenn das Material für die Hülse, die obere Kappe, die untere Kappe und den Anschlussflansch beispielsweise DIN/EN 51CrV4-Stahl ist, kann das Lötfüllmaterial eine nickel-basierte Legierung sein, wie Ni 7Cr 4.5Si 3B 3Fe. Der Verbindungsprozess kann mit einem Löt-Schritt beginnen, beispielsweise in einem Vakuum-Löt-Ofen, um die getrennten Teile, nämlich die Hülse, die obere Kappe, die untere Kappe und den Anschlussflansch, zu verbinden. Anschließend können die oben erwähnten Wärmebehandlungs-Schritte an der erhaltenen, monolithischen Struktur durchgeführt werden, wobei die Schmelztemperatur des Lötfüllmaterials nicht überschritten wird, um erforderliche mechanische Eigenschaften der fluidischen Klemmvorrichtung zu erhalten.

Gemäß einer weiteren Weiterbildung beträgt eine Anzahl der mindestens einen Kammer zwei, drei oder mehr. Die Anzahl der mindestens einen Kammer kann von der Größe und der Form des bewegbaren Teils abhängen. Beispielsweise kann die Anzahl der mindestens einen Kammer drei oder vier betragen, wenn das zentrale Element kreisförmig ist. Je nach Größe und Form des zentralen Elements kann die Anzahl der mindestens einen Kammer auch größer als vier sein. Wenn das zentrale Element polygonal ausgebildet ist, kann die Anzahl der mindestens einen Kammer der Anzahl der polygonalen Seiten des zentralen Elements entsprechen. Die Anzahl der mindestens einen Kammer kann aber auch jede höhere oder niedrigere Anzahl sein.

Eine hohe Haltekraft, Klemmschnelligkeit und/oder ein hohes übertragbares Drehmoment mit einer hohen Klemmpräzision werden durch die vorliegende Erfindung erreicht. Die erfindungsgemäße fluidische Klemmvorrichtung besitzt kompakte Dimensionen und ein geringes Gewicht. Sie gewährleistet eine einfache Installation, bei der keine Überlegungen darüber notwendig sind, wie die fluidische Klemmvorrichtung abgedichtet werden kann, und ist funktional vollständig ohne zusätzliche Komponenten. Außerdem ist die benötigte Energie für den Übergang von dem ersten Zustand in den zweiten Zustand (d.h. den Löse-Vorgang) niedrig, da der Ausschlag der Kammerdeformation klein ist. Der Übergang von dem zweiten Zustand in den ersten Zustand (d.h. den Klemmvorgang) ist passiv, da das Fluid aus der/n Kammer(n) mit dem elastischen Zurückkehren der Kammer(n) in ihre Ausgangsform abfließt.

Die vorliegende Erfindung stellt auch ein System zum Klemmen und Halten eines bewegbaren Teils bereit, wobei das System eine fluidische Klemmvorrichtung wie oben beschrieben und den bewegbaren Teil umfasst.

Die vorliegende Erfindung stellt auch ein Verfahren, insbesondere zum fluidischen Klemmen und Halten eines bewegbaren Teils mit einer Hülse in einer fluidischen Klemmvorrichtung bereit. Das Verfahren umfasst die folgenden Schritte: Beaufschlagen eines Innenraums mindestens einer Kammer der Hülse mit einem ersten oder zweiten vorbestimmten, fluidischen Druck, wobei der erste vorbestimmte, fluidische Druck niedriger als der zweite vorbestimmte, fluidische Druck ist, Aufnehmen des bewegbaren Teils in einem Hohlraum eines zentralen Elements der Hülse in einem zweiten Zustand, in dem der Innenraum der mindestens eine Kammer mit dem zweiten fluidischen Druck beaufschlagt ist, wobei das zentrale Element mit dem bewegbaren Teil an keinem Bereich eines inneren Umfangs des zentralen Elements in kraftschlüssigem Kontakt ist, Klemmen und Halten des bewegbaren Teils in einem ersten Zustand, in dem der Innenraum der mindestens einen Kammer mit dem ersten fluidischen Druck beaufschlagt ist, wobei das zentrale Element mit dem bewegbaren Teil an wenigstens einem Bereich des inneren Umfangs des zentralen Elements in kraftschlüssigem Kontakt ist, wobei das zentrale Element einen Querschnitt in der Längsrichtung des zentralen Elements aufweist, und wobei die mindestens eine Kammer an einem äußeren Umfang des zentralen Elements angeordnet ist und sich entlang einer Längsrichtung des zentralen Elements erstreckt. Das erfindungsgemäße Verfahren kann mit der erfindungsgemäßen, fluidischen Klemmvorrichtung ausgeführt werden, die oben beschrieben wurde.

Gemäß einer Weiterbildung umfasst das Verfahren weiterhin die Schritte: elastisches Verformen der mindestens einen Kammer aus einer Ausgangsform bei Beaufschlagung des Innenraums der mindestens einen Kammer mit dem zweiten fluidischen Druck, und Zurückkehren der mindestens einen Kammer in die Ausgangsform, bei Beaufschlagung des Innenraums der mindestens einen Kammer mit dem ersten fluidischen Druck.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

### Kurzbeschreibung der Zeichnungen

- Figur 1: zeigt schematisch eine dreidimensionale Ansicht einer Hülse gemäß der vorliegenden Erfindung.
- Figur 2: zeigt eine Querschnittsansicht einer Hülse mit einem zentralen Element und Kammern gemäß der vorliegenden Erfindung.
- Figur 3: zeigt eine Querschnittsansicht einer Hülse ohne Beaufschlagung mit fluidischem Druck gemäß der vorliegenden Erfindung.
- Figur 4: zeigt eine Querschnittsansicht einer Hülse mit Beaufschlagung mit fluidischem Druck gemäß der vorliegenden Erfindung.
- Figur 5: zeigt eine dreidimensionale Ansicht einer fluidischen Klemmvorrichtung gemäß der vorliegenden Erfindung.
- Figur 6: zeigt eine Explosionsansicht einer fluidischen Klemmvorrichtung gemäß der vorliegenden Erfindung.
- Figur 7: zeigt eine Längsschnittansicht einer fluidischen Klemmvorrichtung gemäß der vorliegenden Erfindung.
- Figur 8: zeigt ein schematisches Diagramm eines Verfahrens zum fluidischen Klemmen und Halten eines bewegbaren Teils mit einer Hülse in einer fluidischen Klemmvorrichtung gemäß der vorliegenden Erfindung.

### Ausführungsformen

In den im Folgenden beschriebenen Figuren bezeichnen gleiche Bezugszeichen gleiche Elemente. Zur besseren Übersichtlichkeit werden gleiche Elemente nur bei ihrem ersten Auftreten beschrieben. Es versteht sich jedoch, dass die mit Bezug auf eine der Figuren beschriebenen Varianten und Ausführungsformen eines Elements auch auf die entsprechenden Elemente in den übrigen Figuren angewendet werden können.

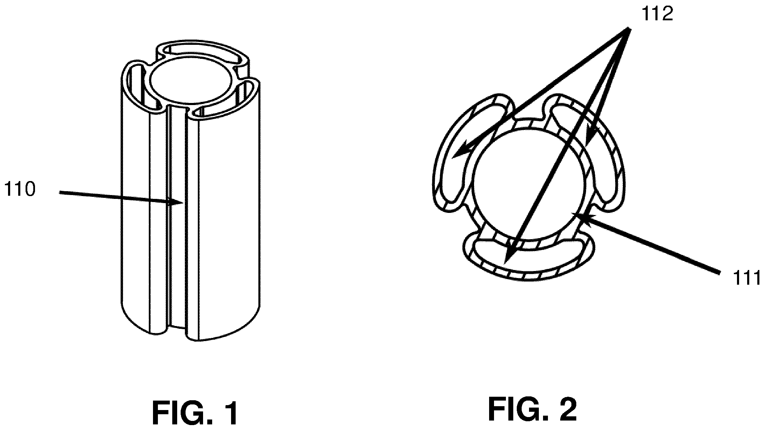

In der Figur 1 ist eine beispielhafte Hülse 110 der fluidischen Klemmvorrichtung gemäß der vorliegenden Erfindung schematisch dargestellt. Ohne Beschränkung der Allgemeinheit sind im Querschnitt der Figur 1 drei Kammern gezeigt, die ein zentrales Element mit einem Hohlraum umgeben. Das zentrale Element ist in der Figur 1 zylindrisch ausgebildet. Das zentrale Element kann in Entsprechung des bewegbaren Teils eine andere Form aufweisen, wie beispielsweise eine polygonale Form. Die Anzahl der Kammem, die das zentrale Element umgeben, kann weniger oder mehr als drei sein. Bei einer polygonal ausgebildeten Form kann die Anzahl der Kammern einer Anzahl von polygonalen Seiten entsprechen. Die in der Figur 1 dargestellte Hülse 110 ist einstückig geformt. Alternativ kann die Hülse 110 so gebildet sein, dass die Kammern als separate Komponenten mit dem zentralen Element dauerhaft fest verbunden sind. Der Umriss der Hülse kann in der Längsrichtung der Hülse unelastisch und starr ausgebildet sein. Die Längsrichtung der Hülse ist orthogonal zum Querschnitt der Hülse.

In der Figur 2 ist schematisch ein Querschnitt der beispielhaften Hülse 110 aus Figur 1 dargestellt. In der Figur 2 weist die Hülse 110 drei Kammern 112 und ein zentrales Element 111 auf. Wie aus der Figur 2 ersichtlich ist, bildet jeweils ein Abschnitt des äußeren Umfangs des zentralen Elements 111 einen Abschnitt der Umwandung einer Kammer 112. Alternativ dazu kann der Abschnitt des äußeren Umfangs des zentralen Elements 111 mit einem Abschnitt der Umwandung einer Kammer 112 dauerhaft fest verbunden sein. Das zentrale Element 111 kann eine beliebige Form aufweisen, die einem bewegbaren Teil entspricht, der im Hohlraum des zentralen Elements 111 aufgenommen wird. Die Größe und Anzahl der Kammern 112 hängt von der Größe und Form des zentralen Elements 111 ab, so dass die Größe und Anzahl der Kammern 112 von den in den Figuren 1 und 2 gezeigten Kammern 112 verschieden sein kann. Die Kammern 112 können mit Fluid gefüllt sein. Das Fluid kann beispielsweise Hydrauliköl, Wasser oder Luft sein. Des Weiteren können die Kammern 112 mit fluidischem Druck beaufschlagt oder entlastet werden.

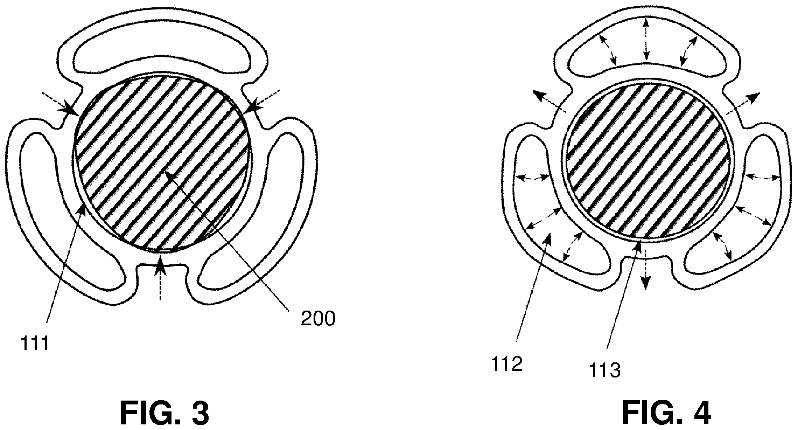

In der Figur 3 ist schematisch ein Querschnitt der beispielhaften Hülse 110 aus den Figuren 1 und 2 dargestellt. Die Hülse 110 ist in der Figur 3 in einem ersten Zustand gezeigt, in dem der Innenraum der Kammer 112 mit einem ersten fluidischen Druck beaufschlagt ist. Der erste fluidische Druck kann Null sein oder einem Umgebungsdruck, beispielsweise einem Umgebungsluftdruck, entsprechen. In der Figur 3 ist weiterhin der bewegbare Teil 200 im Querschnitt dargestellt. Die fluidische Klemmvorrichtung ist auch ohne den bewegbaren Teil 200 funktionsfähig und betriebsbereit. In einer Voreinstellung können die Kammern 112 in einem ersten Zustand, in dem die Hülse 110 mit dem ersten fluidischen Druck beaufschlagt ist, mit einem Fluid gefüllt sein. Wie aus der Querschnittsansicht der Figur 3 ersichtlich ist, hat jede der Kammern 112 im Querschnitt eine elliptische oder ovale Form, die um einen Abschnitt des äußeren Umfangs des zentralen Elements 111 kurvenförmig gekrümmt ist. Die Figur 3 zeigt ferner drei Bereiche des inneren Umfangs des zentralen Elements 111, die in den Hohlraum der Hülse 110 hineinragen, so dass die Bereiche mit dem bewegbaren Teil 200 in kraftschlüssigem Kontakt sind. Die Bereiche, an denen das zentrale Element 111 mit dem bewegbaren Teil 200 in kraftschlüssigem Kontakt ist, sind in der Figur 3 mit gestrichelten Pfeilen verdeutlicht. Die kraftschlüssigen Kontaktbereiche fixieren den bewegbaren Teil 200 exakt und klemmen ihn relativ zur Hülse 110 in allen Rotations- und Translationsfreiheitsgraden.

Die Figur 4 veranschaulicht einen Querschnitt der Hülse 110 in einem zweiten Zustand, in dem der Innenraum der Kammer(n) 112 mit einem zweiten fluidischen Druck beaufschlagt ist. Der zweite fluidische Druck ist höher als der erste fluidische Druck. Der zweite fluidische Druck kann ein hydraulischer oder ein pneumatischer Druck sein. Wie in der Figur 4 anschaulich dargestellt ist, verformen sich die Kammer(n) 112 und das zentrale Element 111 elastisch, wenn die Kammer(n) 112 mit dem zweiten fluidischen Druck beaufschlagt werden. Aus der Querschnittsansicht der Figur 4 ist ersichtlich, dass durch die Verformung des zentralen Elements 111 ein geringfügiges, vorbestimmtes Spiel 113 zwischen dem inneren Umfang des zentralen Elements 111 der Hülse 110 und dem bewegbaren Teil 200 gebildet wird. Der bewegbare Teil 200 hat in diesem Beispiel eine kreisrunde Form. Das zentrale Element 111 wird durch die Anwendung des zweiten fluidischen Drucks im Querschnitt zu einer kreisrunden Hohlform verformt. Alternativ kann der bewegbare Teil 200 eine polygonale Form aufweisen. Wenn der bewegbare Teil 200 eine polygonale Form hat, kann das zentrale Element 111 entsprechend dem bewegbaren Teil 200 polygonal geformt sein. Die Kräfte, die durch die Anwendung des zweiten fluidischen Drucks im Innenraum der Kammer(n) 112 entstehen, sind in der Figur 4 mit Pfeilen dargestellt. Die Richtung der elastischen Verformung des zentralen Elements 111 wird in der Figur 4 mit gestrichelten Pfeilen angedeutet. Das durch die Verformung erhaltene Spiel 113 erlaubt nun eine translatorische Bewegung des bewegbaren Teils 200 relativ zur Hülse 110 in Längsrichtung der Hülse 110. Im Fall des zylindrisch geformten, bewegbaren Teils 200 ist auch eine Rotationsbewegung um die Längsachse möglich. Im Fall eines polygonal geformten, bewegbaren Teils 200 und einem entsprechend polygonal geformten zentralen Elements 111 kann durch die Beaufschlagung des Innenraums der Kammer(n) 112 mit dem zweiten, fluidischen Druck das Spiel 113 zwischen der Hülse 110 und dem bewegbaren Teil 200 gebildet werden, das eine translatorische Bewegung des bewegbaren Teils 200 entlang der Längsachse der Hülse 110 erlaubt. Die Umrisse des zentralen Elements 111 können so gebildet werden, dass eine gewünschte Spielpassung oder Gleitpassung gegenüber dem bewegbaren Teil 200 bei dem vorbestimmten, fluidischen Druck exakt erhalten werden kann. Zum Beispiel kann eine Spielpassung von H7/g6 nach der DIN-Norm DIN 7157 ausgebildet werden. Bei der Kombination der Spielpassungen kann der Buchstabe "H" die Ausführung für die Bohrung und der Buchstabe "g" die Ausführung für die Welle bezeichnen. Der bewegbare Teil 200 kann durch die Hülse 110 aufgrund des definierten Spiels exakt geführt werden, wenn die Hülse 110 in dem mit dem zweiten fluidischen Druck beaufschlagten zweiten Zustand ist.

In dem zweiten Zustand, in dem der Innenraum der Kammer(n) 112 mit dem zweiten fluidischen Druck beaufschlagt ist, können im Innenraum der Kammer(n) 112 Kräfte erzeugt werden, die von Innen nach Außen drücken, wie in der Figur 4 anhand der Pfeile zu sehen ist. Der von dem äußeren Umfang des zentralen Elements 111 entfernt positionierte Abschnitt der Umwandung der gekrümmten, elliptisch-geformten Kammer(n) 112 ist kurvenförmig nach außen (konkav) gekrümmt. Im Vergleich zu dem Abschnitt der Umwandung, der an dem zentralen Element 111 anliegt und der den einwirkenden Kräften entgegengesetzt gekrümmt ist, setzt der von dem zentralen Element 111 entfernt positionierte Abschnitt den entstandenen Kräften weniger Widerstand entgegen. Deshalb wird der von dem zentralen Element 111 entfernt positionierte Abschnitt von den entstandenen Kräften nach Außen gedrückt, also in eine vom Umfang des zentralen Elements 111 wegweisende Richtung. In anderen Worten, aufgrund der Kräfte biegt sich der von dem äußeren Umfang des zentralen Elements 111 entfernt positionierte Abschnitt der Umwandung in einem noch größeren Ausmaß konkav auswärts, d.h. vom Innenraum der Kammer(n) 112 weg. Die Kammer(n) 112 verformen sich elastisch. Durch die elastische Verformung entsteht ein Zug auf die beiden seitlichen Abschnitte der Umwandung der Kammer(n) 112. Die entstandenen Zugkräfte wirken in eine Richtung, die vom Hohlraum des zentralen Elements 111 wegweist. Der äußere Umfang des zentralen Elements 111 steht mit den Kammern radial in Verbindung und erfährt die Zugkräfte, die auf die beiden seitlichen Abschnitte der Umwandung der Kammer(n) 112 wirken. Es resultiert eine elastische Verformung des äußeren Umfangs des zentralen Elements 111, so dass die Bereiche des zentralen Elements 111, die bei Anwendung des ersten fluidischen Drucks in den Hohlraum geragt sind, aus dem Hohlraum herausgezogen und vom bewegbaren Teil 200 weggezogen werden. Das Spiel 113 wird gebildet. Die gestrichelten Pfeile in der Figur 4 deuten die Richtung an, in die die Zugkräfte wirken.

Der von dem äußeren Umfang des zentralen Elements 111 entfernt positionierte Abschnitt der Umwandung der gekrümmten, elliptisch-geformten Kammer(n) 112 ist länger. Das hat den Effekt, dass die elastische Verlagerung der Bereiche des zentralen Elements 111, die bei Anwendung des ersten fluidischen Drucks in den Hohlraum geragt sind, wegen der Hebelkraftwirkung der beiden kurzen, seitlichen Abschnitte der Umwandung der Kammer(n) 112 größer ist. Eine größere Verlagerung der Bereiche des zentralen Elements 111, die bei Anwendung des ersten fluidischen Drucks in den Hohlraum geragt sind, ist wünschenswert, da dies eine größere Klemmkraft im ersten Zustand bedeutet.

Wenn der Innenraum der Kammer(n) 112 vom zweiten fluidischen Druck entlastet wird, kehren die Kammer(n) 112 und das zentrale Element 111 in ihre Ausgangsform zurück und der bewegbare Teil 200 wird erneut fixiert und geklemmt.

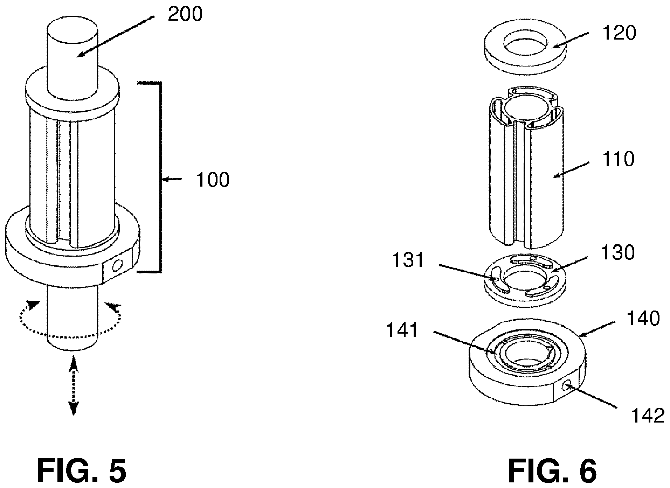

Die Figur 5 zeigt schematisch ein Beispiel einer fluidischen Klemmvorrichtung 100 gemäß der vorliegenden Erfindung mit der zuvor beschriebenen Hülse 110 und weiteren Komponenten, die in der Figur 6 im Detail zu sehen sind. Die Pfeilrichtungen der gepunkteten Pfeile veranschaulichen die möglichen Bewegungsfreiheitsgrade des bewegbaren Teils 200. Sowohl eine Rotationsals auch eine Translationsbewegung sind möglich.

Die Figur 6 veranschaulicht beispielhaft die einzelnen Komponenten der in der Figur 5 gezeigten, fluidischen Klemmvorrichtung 100 gemäß der vorliegenden Erfindung. Die fluidische Klemmvorrichtung 100 umfasst neben der in den Figuren 1 bis 4 beschriebenen Hülse 110 ferner eine obere Kappe 120, eine untere Kappe 130 und einen Verbindungsflansch 140. Die untere Kappe 130 weist in der Figur 6 drei Öffnungen 131 auf. Die Anzahl der Öffnungen 131 kann mehr oder weniger als drei betragen. Die Anzahl der Öffnungen 131 kann einer Anzahl von Kammern 112 entsprechen. In der Figur 6 ist je eine Öffnung 131 in Fluidverbindung mit je einer Kammer 112. Alternativ kann eine Kammer 112 mit zwei oder mehr Öffnungen 131 in Fluidverbindung sein. Der Anschlussflansch 140 umfasst in der Figur 6 zwei Kanaleingangsöffnungen 142 und einen Kanal 141. Der Kanal ist in Fluidverbindung mit den Öffnungen 131 der unteren Kappe 130. Die obere Kappe 120 und die untere Kappe 130 dienen dazu, die fluid-enthaltenden Kammern 112 der Hülse 110 zu verschließen. Der Anschlussflansch 140 kann als Befestigungselement für die fluidische Klemmvorrichtung 100 dienen. Des Weiteren verteilt der Anschlussflansch 140 das Fluid von den Kanaleingangsöffnungen 142, über den Kanal 141 und die Öffnungen 131 in die Kammern 112 der Hülse 110. In dem in Figur 6 gezeigten Beispiel sind zwei Kanaleingangsöffnungen 142 vorgesehen, um die Fluidverbindung zu ermöglichen und eine Entlüftung während des erstmaligen Befüllens mit dem Fluid zu gewährleisten. Im Gegensatz zu der Hülse 110, sind die obere Kappe 120, die untere Kappe 130 und der Anschlussflansch 140 nicht flexibel während des Betriebs der fluidischen Klemmvorrichtung 100. Die obere Kappe 120 und/oder die untere Kappe 130 und/oder der Anschlussflansch 140 können verwendet werden, um die Hülse 110 in dem mechanischen System zu befestigen.

Die Hülse 110, die obere Kappe 120, die untere Kappe 130 und der Anschlussflansch 140 können gleiches Material umfassen. Das Material kann geeignete, mechanische Eigenschaften für die gewünschte Anwendung und Klemmkraft besitzen. Das Material kann ein entsprechender Verbund von Metallen, Polymeren und anderen Materialien sein. Für eine Anwendung, bei der eine hohe Klemmkraft erzielt werden soll, kann das Material ein hochfester Stahl oder Federstahl, beispielsweise ein DIN/EN 51CrV4-Stahl oder ein ähnliches Material, sein. Das Material kann geeigneter Weise wärmebehandelt, gehärtet oder temperiert sein, um die optimalen, mechanischen Eigenschaften für eine gewünschte Betriebsleistung und Lebenszeit der fluidischen Klemmvorrichtung 100 zu erhalten. Insbesondere können eine ausreichende Formänderungsfestigkeit und Ermüdungsfestigkeit für einen bestimmten fluidischen Druck in der Hülse 110 während des wiederholten Klemmen-Lösen-Betriebs erreicht werden. Bevorzugter Weise werden die Hülse 110, die obere Kappe 120, die untere Kappe 130 und der Anschlussflansch 140 aus dem gleichen Material hergestellt und so miteinander verbunden, dass die fluidische Klemmvorrichtung 100 einen einzigen Teil bildet. Wenn die Hülse 110, die obere Kappe 120, die untere Kappe 130 und der Anschlussflansch 140 aus Stahl oder einem anderen, metallischen Material hergestellt werden, können die Hülse 110, die obere Kappe 120, die untere Kappe 130 und der Anschlussflansch 140 mit Hilfe von Löten oder Hartlöten zusammengefügt werden. Das gewährleistet eine angemessene Verbindung zwischen allen Teilen in Form von mechanischer Intaktheit und Abdichtung der Kammern 112 und erreicht ein einziges, monolithisches Element als fluidische Klemmvorrichtung 100. Das Lötfüllmaterial kann geeignete, mechanische Eigenschaften aufweisen, um die bauliche Beanspruchung, die durch den fluidischen Druck verursacht wird, auszuhalten. Das Lötfüllmaterial kann des Weiteren einen angemessenen Schmelzpunkt haben, der mit der erforderlichen Wärmebehandlung des Materials für die Hülse 110, die obere Kappe 120, die untere Kappe 130 und den Anschlussflansch 140 kompatibel ist. Wenn das Material für die Hülse 110, die obere Kappe 120, die untere Kappe 130 und den Anschlussflansch 140 beispielsweise DIN/EN 51CrV4-Stahl ist, kann das Lötfüllmaterial eine nickel-basierte Legierung sein, wie Ni 7Cr 4.5Si 3B 3Fe. Der Verbindungsprozess kann mit einem Löt-Schritt beginnen, beispielsweise in einem Vakuum-Löt-Ofen, um die getrennten Teile, nämlich die Hülse 110, die obere Kappe 120, die untere Kappe 130 und den Anschlussflansch 140, zu verbinden. Anschließend können die oben erwähnten Wärmebehandlungs-Schritte an der erhaltenen, monolithischen Struktur durchgeführt werden, wobei die Schmelztemperatur des Lötfüllmaterials nicht überschritten wird, um die erforderlichen mechanischen Eigenschaften der fluidischen Klemmvorrichtung 100 zu erhalten.

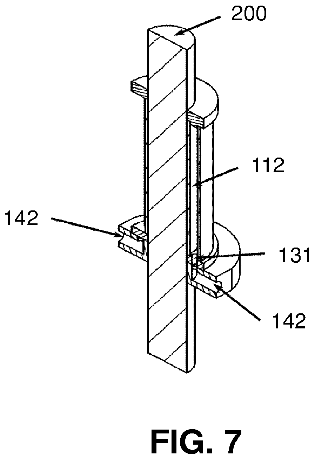

Die Figur 7 zeigt einen Längsschnitt durch die fluidische Klemmvorrichtung 100 der Figuren 5 und 6 gemäß der vorliegenden Erfindung. Aus der Figur 7 ist erkennbar, dass die fluidische Klemmvorrichtung 100 den bewegbaren Teil 200 umgibt. Durch die Kanaleingangsöffnungen 142 des Anschlussflansches 140 kann Fluid zugeführt werden. Die Öffnungen 131 der unteren Kappe 130 sind in Fluidverbindung mit dem Kanal 141 des Anschlussflansches 140 und mit den Kammern 112 der Hülse 110. Über den Kanal 141 des Anschlussflansches kann das Fluid durch die Öffnungen 131 der unteren Kappe 130 in die Kammern 112 der Hülse 110 verteilt werden.

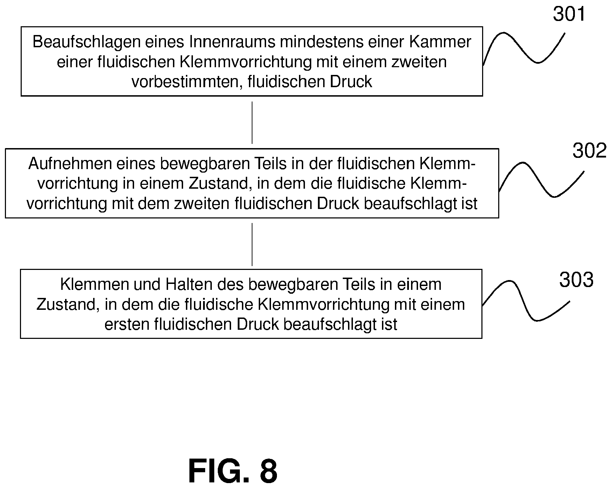

Die Figur 8 stellt schematisch ein Verfahren zum fluidischen Klemmen und Halten eines bewegbaren Teils mit einer Hülse in einer fluidischen Klemmvorrichtung gemäß der vorliegenden Erfindung dar. Das Verfahren kann mit der in den Figuren 5 bis 7 beschriebenen fluidischen Klemmvorrichtung 100, die die in den Figuren 1 bis 4 beschriebenen Hülse 110 umfasst, ausgeführt werden. Ein anfänglicher Schritt kann dem in Figur 8 dargestellten Verfahren vorgeschaltet sein. In dem anfänglichen Schritt können die Kammern 112 der Hülse 110 unter Anwendung des ersten fluidischen Drucks mit einer voreingestellten Menge Fluid gefüllt werden. Wie im Zusammenhang mit den Figuren 1 bis 4 beschrieben, sind das zentrale Element 111 und die Kammern 112 der Hülse 110 unter Beaufschlagung eines Innenraums der Kammern 112 mit dem zweiten fluidischen Druck aus einer Ausgangsform zu einer vom Hohlraum der Hülse weggespannten Form elastisch verformbar. Insbesondere wird für das Erstbefüllen der Kammern 112 im anfänglichen Schritt der erste fluidische Druck und die voreingestellte Menge Fluid so gewählt, dass die Ausgangsform des zentralen Elements 111 und der Kammern 112 der Hülse 110 beibehalten wird. In der Ausgangsform können in einer Querschnittsansicht ein oder mehrere Bereiche des inneren Umfangs des zentralen Elements 111 in den Hohlraum der Hülse 110 hineinragen.

Im Schritt 301 werden die Innenräume der Kammern 112 mit dem zweiten vorbestimmten, fluidischen Druck beaufschlagt. Die dadurch in den Innenräumen der Kammern 112 entstehenden Kräfte bewirken eine elastische Verformung der Kammern 112 und des zentralen Elements 111 der Hülse 110 aus der Ausgangsform zu einer vom Hohlraum der Hülse weggespannten Form. In dieser elastischen Verformung werden die ein oder mehreren Bereiche des inneren Umfangs des zentralen Elements 111, die in der Ausgangsform in den Hohlraum hineinragen, vom Hohlraum weggespannt, wodurch die ein oder mehreren Bereiche aus dem Hohlraum herausgezogen werden. Das Spiel 113 wird gebildet. Der bewegbare Teil 200 und das zentrale Element 111 sind gegeneinander verschiebbar.

Im zweiten Zustand, in dem die fluidische Klemmvorrichtung mit dem zweiten fluidischen Druck beaufschlagt ist, wird im Schritt 302 der bewegbare Teil 200 im Hohlraum der Hülse 110 der fluidischen Klemmvorrichtung 100 aufgenommen oder bewegt.

In einem weiteren Schritt wird der zweite fluidische Druck von den Kammern 112 gelöst. Die Kammern 112 und das zentrale Element 111 kehren in ihre Ausgangsform zurück. Die Zugkräfte lösen sich und sowohl die Umwandung der Kammern 112 als auch das zentrale Element entspannen. Aufgrund der Entspannung ragen die ein oder mehreren Bereiche des inneren Umfangs des zentralen Elements 111 wieder in den Hohlraum der Hülse 110 der Klemmvorrichtung 100 hinein und greifen in den bewegbaren Teil 200, der sich im Hohlraum befindet. Die fluidische Klemmvorrichtung 100 kann im Schritt 303 in den ersten Zustand zurückkehren, in dem der Innenraum der Kammern 112 mit dem ersten fluidischen Druck beaufschlagt ist, und der bewegbare Teil 200 wird von der fluidischen Klemmvorrichtung 100 fixiert und geklemmt.

## Patentansprüche

1. Eine fluidische Klemmvorrichtung (100) mit einer Hülse (110) zum Klemmen und Halten eines bewegbaren Teils (200), wobei die Hülse (110) umfasst:
ein zentrales Element (111) mit einem Querschnitt in einer Längsrichtung des zentralen Elements (111), der einen Hohlraum umfasst, der konfiguriert ist, den bewegbaren Teil (200) aufzunehmen,
**gekennzeichnet dadurch, dass** die Hülse (110) weiterhin umfasst:
mindestens eine Kammer (112), die an einem äußeren Umfang des zentralen Elements (111) angeordnet ist und sich entlang der Längsrichtung des zentralen Elements (111) erstreckt, wobei die mindestens eine Kammer (112) konfiguriert ist, ein Fluid aufzunehmen, wobei die fluidische Klemmvorrichtung (100) konfiguriert ist, einen Innenraum der mindestens einen Kammer (112) mit einem ersten oder zweiten vorbestimmten, fluidischen Druck zu beaufschlagen, wobei der erste vorbestimmte, fluidische Druck niedriger als der zweite vorbestimmte, fluidische Druck ist; und
wobei das zentrale Element (111) konfiguriert ist, in einem ersten Zustand, in dem der Innenraum der mindestens einen Kammer (112) mit dem ersten fluidischen Druck beaufschlagt ist, mit dem bewegbaren Teil (200) an wenigstens einem Bereich eines inneren Umfangs des zentralen Elements (111) in kraftschlüssigem Kontakt zu sein und den bewegbaren Teil (200) zu klemmen und zu halten; und
wobei das zentrale Element (111) konfiguriert ist, in einem zweiten Zustand, in dem der Innenraum der mindestens einen Kammer (112) mit dem zweiten fluidischen Druck beaufschlagt ist, mit dem bewegbaren Teil (200) an keinem Bereich des inneren Umfangs des zentralen Elements (111) in kraftschlüssigem Kontakt zu sein.

2. Die fluidische Klemmvorrichtung (100) nach Patentanspruch 1, wobei die mindestens eine Kammer (112) konfiguriert ist, sich bei Beaufschlagung des Innenraums der mindestens einen Kammer (112) mit dem zweiten fluidischen Druck aus einer Ausgangsform elastisch zu verformen und bei Beaufschlagung des Innenraums der mindestens einen Kammer (112) mit dem ersten fluidischen Druck in ihre Ausgangsform zurückzukehren.

3. Die fluidische Klemmvorrichtung (100) nach Patentanspruch 1 oder 2, wobei der Querschnitt des zentralen Elements (111) im zweiten Zustand, in dem die mindestens eine Kammer (112) mit dem zweiten fluidischen Druck beaufschlagt ist, kreisförmig ist oder eine polygonale Form aufweist.

4. Die fluidische Klemmvorrichtung (100) nach Patentanspruch 2, wobei der Querschnitt des zentralen Elements (111) mit Verformen der mindestens einen Kammer (112) bei Beaufschlagung des Innenraums der mindestens einen Kammer (112) mit dem zweiten fluidischen Druck radial elastisch verformbar ist und/oder wobei die mindestens eine Kammer (112) weiterhin konfiguriert ist, sich bei Beaufschlagung des Innenraums der mindestens einen Kammer (112) mit dem zweiten fluidischen Druck in einer Querrichtung, die senkrecht zur Längsrichtung ist, weg von dem zentralen Element elastisch zu verformen.

5. Die fluidische Klemmvorrichtung (100) nach Patentanspruch 4, wobei durch Verformen der mindestens einen Kammer (112) das Verformen des zentralen Elements (111) bewirkbar ist.

6. Die fluidische Klemmvorrichtung (100) nach einem der vorhergehenden Patentansprüche, weiterhin umfassend:
eine obere Kappe (120), die an einem oberen Ende der mindestens einen Kammer (112) angeordnet ist;
eine untere Kappe (130) mit mindestens einer Öffnung (131), wobei die untere Kappe (130) an einem unteren Ende der mindestens einen Kammer (112) angeordnet ist; und
einen Anschlussflansch (140) mit einem Kanal (141) und wenigstens einer Kanaleingangsöffnung (142), wobei der Kanal (141) in Fluidverbindung mit der mindestens einen Öffnung (131) der unteren Kappe (130) ist.

7. Die fluidische Klemmvorrichtung (100) nach einem der vorhergehenden Patentansprüche, wobei eine Anzahl der mindestens einen Öffnung (131) der unteren Kappe (130) einer Anzahl der mindestens einen Kammer (112) entspricht.

8. Die fluidische Klemmvorrichtung (100) nach einem der Patentansprüche 6 oder 7, wobei der Anschlussflansch (140) weiterhin konfiguriert ist, das Fluid von der wenigstens einen Kanaleingangsöffnung (142) durch den Kanal (141) und die mindestens eine Öffnung (131) der unteren Kappe (130) in die mindestens eine Kammer (112) zu verteilen.

9. Die fluidische Klemmvorrichtung (100) nach einem der vorhergehenden Patentansprüche, wobei das zentrale Element (111) und die mindestens eine Kammer (112) einstückig ausgebildet sind.

10. Die fluidische Klemmvorrichtung (100) nach einem der Patentansprüche 6 bis 9, wobei die obere Kappe (120), die untere Kappe (130) und der Anschlussflansch (140) unelastisch ausgebildet sind und in dem ersten Zustand oder dem zweiten Zustand starr bleiben.

11. Die fluidische Klemmvorrichtung (100) nach einem der Patentansprüche 6 bis 10, wobei die Hülse (111), die obere Kappe (120), die untere Kappe (130) und der Anschlussflansch (140) gleiches Material umfassen.

12. Die fluidische Klemmvorrichtung (100) nach einem der vorhergehenden Patentansprüche, wobei eine Anzahl der mindestens einen Kammer (112) zwei, drei oder mehr beträgt.

13. Ein System zum Klemmen und Halten eines bewegbaren Teils (200), umfassend:
eine fluidische Klemmvorrichtung (100) nach einem der vorhergehenden Patentansprüche; und
den bewegbaren Teil (200).

14. Ein Verfahren zum fluidischen Klemmen und Halten eines bewegbaren Teils (200) mit einer Hülse (110) in einer fluidischen Klemmvorrichtung (100), wobei das Verfahren die folgenden Schritte umfasst:
Beaufschlagen eines Innenraums mindestens einer Kammer (112) der Hülse (110) mit einem ersten oder zweiten vorbestimmten, fluidischen Druck, wobei der erste vorbestimmte, fluidische Druck niedriger als der zweite vorbestimmte, fluidische Druck ist;
Aufnehmen des bewegbaren Teils (200) in einem Hohlraum eines zentralen Elements (111) der Hülse (110) in einem zweiten Zustand, in dem der Innenraum der mindestens eine Kammer (112) mit dem zweiten fluidischen Druck beaufschlagt ist, wobei das zentrale Element (111) mit dem bewegbaren Teil (200) an keinem Bereich eines inneren Umfangs des zentralen Elements (111) in kraftschlüssigem Kontakt ist;
Klemmen und Halten des bewegbaren Teils (200) in einem ersten Zustand, in dem der Innenraum der mindestens einen Kammer (112) mit dem ersten fluidischen Druck beaufschlagt ist, wobei das zentrale Element (111) mit dem bewegbaren Teil (200) an wenigstens einem Bereich des inneren Umfangs des zentralen Elements (111) in kraftschlüssigem Kontakt ist;
wobei das zentrale Element (111) einen Querschnitt in der Längsrichtung des zentralen Elements (111) aufweist; und
wobei die mindestens eine Kammer (112) an einem äußeren Umfang des zentralen Elements (111) angeordnet ist und sich entlang einer Längsrichtung des zentralen Elements (111) erstreckt.

15. Das Verfahren nach Patentanspruch 14, weiterhin umfassend:
elastisches Verformen der mindestens einen Kammer (112) aus einer Ausgangsform bei Beaufschlagung des Innenraums der mindestens einen Kammer (112) mit dem zweiten fluidischen Druck; und
Zurückkehren der mindestens einen Kammer (112) in die Ausgangsform, bei Beaufschlagung des Innenraums der mindestens einen Kammer (112) mit dem ersten fluidischen Druck.
